# EUROPÄISCHE PATENTSCHRIFT

(11) **EP 2 017 571 B1**
(45) Veröffentlichungstag und Bekanntmachung des Hinweises auf die Patenterteilung: **27.01.2010**
(21) Anmeldenummer: 07014270.8
(22) Anmeldetag: 20.07.2007
(51) Int. Cl.: G01B 11/25, G08B 13/189, G01S 17/02, G07G 3/00

(54) **3D-Sicherheits-Sensor und Verfahren zum Testen eines 3D-Sicherheits-Sensors**
3D security sensor and method for testing a 3D security sensor
Capteur de sécurité en 3D et procédé destiné à tester un capteur de sécurité en 3D

(43) Veröffentlichungstag der Anmeldung: 21.01.2009
(73) Patentinhaber: SICK AG, 79183 Waldkirch (DE)
(72) Erfinder: Bay, Wolfgang, 79194 Gundelfingen (DE)
(74) Vertreter: Patentanwälte Westphal, Mussgnug & Partner

(56) Entgegenhaltungen:
- EP-A- 0 902 402
- WO-A-2004/029502
- DE-A1-102006 010 990
- DE-C1- 10 017 344
- US-A1- 2006 187 303

## Beschreibung

Die Erfindung betrifft einen 3D-Sicherheits-Sensor gemäß dem Oberbegriff des Patentanspruchs 1 und ein Verfahren zum Testen eines 3D-Sicherheits-Sensors gemäß dem Oberbegriff des Patentanspruchs 5.

Sicherheitssensoren finden breite Anwendung bei der Absicherung von Gefahrenbereichen, beispielsweise in Form von Lichtgittern. Allerdings ist diese Anwendung bislang fast ausschließlich auf das Überwachen von Grenzlinien und/oder Grenzflächen beschränkt und für die Überwachung von Räumen kaum verbreitet. Sollte tatsächlich ein Volumen überwacht werden müssen, wird dies in der Regel nach dem Stand der Technik durch eine Rasterung des Volumens mit Hilfe einer Vielzahl von flächigen Sicherheitssensoren, z.B. Lichtgittern, getan oder durch Einrichtung jeweils eines Sicherheitssensors für alle Grenzflächen, was zu hohem Materialaufwand und damit hohen Kosten führt.

Diese Beschränkung in der Anwendung ist nicht darauf zurückzuführen, dass 3D-Sensoren als solche technisch nicht verfügbar wären, auch wenn die Anforderungen an diese Systeme vielfältig sind und unter anderem die schnelle Erfassung einer Vielzahl von Entfernungsbildpunkten und Sicherstellung der Funktionsweise auf bei Auftreten jeglicher Art von optischer Störstrahlung und/oder optisch kritischen, z.B. glänzenden oder kontrastarmen Objekten umfassen.

Für die Realisierung eines optoelektronischen 3D-Sensors, d.h. eines Sensors, der geeignet ist, ein Volumen im Raum zu überwachen, sind eine Reihe unterschiedlicher Verfahren bekannt:

Einerseits gibt es Flugzeit-basierte Verfahren, bei denen von einer Strahlungsquelle ein modulierter Lichtpuls ausgesendet, an dem Messobjekt reflektiert und detektiert wird, wobei die Laufzeit des Lichtpulses durch Ermittlung der Phasendifferenz des modulierten Lichtes bestimmt wird. Ein Beispiel für ein nach diesem Prinzip arbeitendes System lehrt beispielsweise die DE 44 40 613 C1. Ein Problem bei dem Einsatz dieses 3D-Sensors ist aber, dass erhebliche Fehlmessungen infolge der Phasenüberlagerung verschieden langer optischer Wege auftreten können, die insbesondere dann relevant werden, wenn Objekte mit stark unterschiedlichem Reflexionsgrad nachzuweisen sind.

Eine alternative Vorgehensweise bei der Realisation eines 3D-Sensors, die z.B. der DE 198 33 207 A1 zu entnehmen ist, sieht vor, dass ein Objekt mit einem oder mehreren sehr kurzen Lichtpulsen beleuchtet wird und zur Abstandmessung ein Zeitfenster geöffnet wird, das kleiner oder gleich der Länge der ausgesandten Lichtpulse ist. Zeitverzögert eintreffende Lichtpulse werden teilweise hinten abgeschnitten, so dass die unterschiedlichen Abstände unterschiedlicher Punkte des Gegenstandes in unterschiedliche Ladungen in den Pixeln des optoelektronischen Sensors, auf die sie abgebildet werden, umgesetzt werden. Problematisch ist hier die Tatsache, dass bei diesen Sensoren letztlich die Auswertung eines Amplitudenwertes erfolgt, was dazu führt, dass erzielbare Flankensteilheiten, Pulsverformungen und deren amplitudenabhängige Änderung sowohl hinsichtlich der Beleuchtungspulse als auch hinsichtlich der realen Integrationszeiten des Sensors eine wichtige Rolle spielen. Die Kontrolle dieser Einflussfaktoren und die Einhaltung einer vorgegebenen Serienkonstanz ist kostenintensiv und technisch schwierig.

Schließlich werden auch noch als 3D-Sensor "traditionelle" Stereokameras verwendet, die die Information zweier unabhängiger optoelektronischer Sensoren, deren fortan als Raumwinkelbereiche oder kurz Raumwinkel bezeichnete Gesichtsfelder, d.h. die Bereiche, in denen sie einen Gegenstand nachweisen können, sich überlappen, so miteinander verrechnen, dass über die Triangulation der Daten der Sensoren eine Tiefeninformation den jeweiligen Bildpunkten zugeordnet werden kann. Zur automatisierten Bestimmung dieses Maßes im 3D-Sensor ist es also notwendig, die Verlagerung des Gegenstands in den beiden Bildern automatisiert zu berechnen. Die Präzision, mit der dies gelingt, hängt entscheidend vom Kontrast des Gegenstands und dem Kontrast des Gegenstands gegenüber dem Hintergrund ab.

Darüber hinaus ergibt sich aber bei der Anwendung aller genannten Arten von 3D-Sensoren in sicherheitsrelevanten Applikationen die Schwierigkeit, dass für diesen Einsatz ein ausgereiftes Überwachungssystem die störungsfreie Funktion des 3D-Sensors zu jedem Zeitpunkt oder die Ausgabe einer Störungsmeldung sicherstellen muss. Dafür sind zwei Ansätze aus dem Stand der Technik bekannt:

Die DE 10 2006 010 990 A1 lehrt die Erzeugung von Testbildern in einem 3D-Sensor mit einer integrierten Testbild-Generierung. Problematisch ist hier der Ansatz, dass eine zu prüfende Einheit die Prüfung durchführen soll. Ein Fehler in dieser Einheit wird also auch zu einem fehlerhaften Ergebnis der Funktionsüberwachung führen, was in sicherheitsrelevanten Applikationen inakzeptabel ist.

Aus der US 2006/0187303 A1 ist ein bildgebender Sensor bekannt, der eine Auswerteeinheit für die auf einem Bildsignal basierende Überwachung der Funktion des Sensors, beispielsweise durch Auswertung invarianter Muster, empirisches Wissen über typische Signalformen von Messungen, Verwendung von Redundanzen in einem Netzwerk von Sensoren oder von zeitlichen Redundanzen, aufweist.

Aus der EP 902 402 A1 ist ein Verfahren zur optischen Überwachung eines Raumbereichs bekannt, bei dem eine Auswerteeinheit Grauwerte eines aktuellen Bildes und eines Referenzbildes miteinander vergleicht und die Differenz zwischen diesen Grauwerten auswertet.

Die EP 1 543 270 B1 lehrt einen nach dem Prinzip der Stereoskopie arbeitenden Sensor zur dreidimensionalen Auswertung von jeweils zwei Bildern. Dabei werden für die Auswertung der Kamerabilder jeweils zwei Verfahren angewendet, eine korrelations- und eine konturbasierte Analyse. Jedes dieser Auswerteverfahren genügt für sich genommen nicht den Anforderungen, die ein sicherheitsrelevantes System zu erfüllen hat. Die Überprüfung des Systems auf sichere Funktion erfolgt durch den Vergleich der Ergebnisse der beiden unsicheren Auswerteverfahren. Ein nicht übereinstimmendes Ergebnis der beiden Auswertungen wird dabei wie eine Verletzung des Schutzbereiches behandelt.

Problematisch ist hierbei, dass die beiden gemäß der Lehre der EP 1 543 270 B1 verwendeten Verfahren bei identischen Eingangsdaten und bestimmten, realen Umgebungen verfahrensbedingt unterschiedliche Ergebnisse erzielen, ohne dass wirklich eine Funktionsstörung des 3D-Sensors vorläge.

Die Aufgabe der Erfindung besteht darin, einen robusten und preisgünstigen 3D-Sicherheits-Sensor insbesondere für

Die Aufgabe der Erfindung besteht darin, einen robusten und preisgünstigen 3D-Sicherheits-Sensor insbesondere für industrielle Anwendungen und ein Verfahren zum Testen eines solchen 3D-Sensors bereitzustellen.

Diese Aufgabe wird gelöst durch einen 3D-Sicherheits-Sensor mit den Merkmalen des Anspruchs 1 und ein Verfahren zum Testen eines 3D-Sicherheits-Sensors mit den Merkmalen des Anspruchs 5.

Vorteilhafte Ausführungen und Weiterbildungen der Erfindung sind in den jeweils rückbezogenen Unteransprüchen angegeben.

Der Erfindung liegt die Erkenntnis zugrunde, dass durch Vorsehen eines von den anderen Komponenten des 3D-Sicherheits-Sensors völlig unabhängigen zusätzlichen Signalverarbeitungszweiges, umfassend einen Speicher für Testmuster, einen Störungsdetektor und eine Störungs-Ausgangseinheit in einer an sich vorbekannten Auswerte- und Steuereinheit eine Prüfung der Einzelkomponenten erfolgen kann und die Voraussetzung für eine Funktionsüberwachung der einzelnen Komponenten des 3D-Sicherheits-Sensors geschaffen werden kann.

Dabei werden in dem getrennten Speicher für Testmuster Testmuster abgelegt, die alternativ zu den Kameradaten der Auswerteeinheit zugeführt werden. Diese Testmuster können beispielsweise aus geometrisch angeordneten Grauwertverläufen und Kontrastveränderungen oder Objekten der notwendigen Größe und Anzahl, um eine Verletzung des Schutzbereiches hervorzurufen, bestehen und erlauben bei geschickter Ausführung, den gesamten Arbeitsbereich der Auswerteeinheit mit nur einem Testmusterpaar auf korrekte Funktion zu prüfen. Die Überprüfung erfolgt durch anschließenden Vergleich des aktuell ausgewerteten Bildes mit einem im Speicher für Testmuster hinterlegten Soll-Bild im Störungsdetektor. Wird dabei ein über zulässige Toleranzen hinausgehender Unterschied festgestellt, wird über die Störungs-Ausgangseinheit eine Störung gemeldet.

Die Funktion des Vergleichers kann überprüft werden, indem durch den Störungsdetektor überwacht wird, ob ein in die Auswerteeinheit eingespeistes Testmuster, das aus Objekten der notwendigen Größe und Anzahl besteht, um eine Verletzung des Schutzbereiches hervorzurufen, die für eine vorliegende Schutzbereichsverletzung definierte Reaktion des Vergleichers hervorruft.

Für eine zuverlässige Funktionsüberprüfung des 3D-Sicherheits-Sensors ist sicherzustellen, dass die Testmuster und das zugeordnete Sollergebnis nach der Inbetriebnahme des 3D-Sicherheits-Sensors nicht mehr verändert werden können.

Der erfindungsgemäße 3D-Sicherheits-Sensor umfasst eine erste Kamera und eine zweite Kamera, die so zueinander ausgerichtet sind, dass ihre Raumwinkelbereiche sich überlappen, und eine Steuer- und Auswerteeinheit umfassend eine Bildauswerteeinheit, einen Vergleicher, einen Speicher für Schutzraumdefinition und eine Schutzraumverletzungs-Ausgangseinheit, wobei zusätzlich ein Speicher für Testmuster, ein Störungsdetektor und eine Störungs-Ausgangseinheit vorgesehen sind. Mit Hilfe dieser Komponenten ist es, wie weiter unten detailliert dargelegt wird, möglich, eine Funktionskontrolle der zum Nachweis einer Schutzraumverletzung notwendigen Komponenten der Steuer- und Auswerteeinheit durchzuführen und eine Fehlfunktion nicht nur nachzuweisen, sondern auch sicher einer Komponente zuzuordnen. Es bestehen Signalverbindungen zumindest zwischen einem Ausgang des Speichers für Testmuster und einem Eingang des Störungsdetektors, zwischen einem Ausgang des Störungsdetektors und einem Eingang der Störungs-Ausgangseinheit sowie zwischen einem Ausgang des Speichers für Schutzraumdefinitionen und einem Eingang des Vergleichers. Zwei Eingänge der Bildauswerteeinheit sind über Schalter wahlweise mit jeweils einem Ausgang einer Kamera oder mit jeweils einem Ausgang des Speichers für Testmuster verbindbar. Weiter ist ein Ausgang der Bildauswerteeinheit über einen Schalter jeweils wahlweise mit einem Eingang des Vergleichers oder mit einem Eingang des Störungsdetektors verbindbar und/oder ein Ausgang des Vergleichers über einen Schalter jeweils wahlweise mit einem Eingang der Schutzraumverletzungs-Ausgangseinheit oder mit einem Eingang des Störungsdetektors verbindbar.

Gemäß einer bevorzugten Ausführungsform ist vorgesehen, dass zusätzlich eine Signalverbindung zwischen einem Ausgang der Bildauswerteeinheit und einem Speicherbereich des Speichers für Schutzraumdefinitionen vorhanden ist, über die Ergebnisse der Auswertung in der Bildauswerteeinheit im dafür vorgesehenen Speicherbereich des Speichers für Schutzraumdefinitionen speicherbar sind. Diese Anordnung erlaubt nämlich eine direkte Definition des Schutzraumes dadurch, dass ein Resultat der Bildauswerteeinheit, das auf Bildern der Kameras basiert, die zu einem Zeitpunkt aufgenommen werden, zu dem sichergestellt ist, dass keine Schutzraumverletzung vorliegt, als Schutzraumdefinition verfügbar gemacht wird. Dies ist insbesondere bei sich schnell verändernden Schutzräumen eine große Arbeitserleichterung. Die Schutzraumdefinitionen können im Speicher für Schutzraumdefinitionen aber auch auf andere Weise hinterlegt werden.

Besonders vorteilhaft ist es, zusätzlich eine Beleuchtungseinheit vorzusehen, mittels derer der Raumbereich, in dem sich die Raumwinkelbereiche, die von den Kameras erfasst werden, überlappen, zumindest in Teilbereichen mit einer Beleuchtungsstruktur versehbar ist, die die Eigenschaften inhomogen, aperiodisch und selbstunähnlich aufweist. Durch die inhomogene Beleuchtung wird ein Bildkontrast im überwachten Schutzraum erzeugt. Der Vergleich eines mit Beleuchtung aufgenommenem Bildes des Schutzraums mit einem ohne Beleuchtung aufgenommenen Bild mit Hilfe des Vergleichers muss dann zumindest in Teilbereichen des Bildes das Beleuchtungsmuster reproduzieren. Dies kann im Störungsdetektor durch Vergleich des Ausgangssignals des Vergleichers mit der im Speicher für Testmuster hinterlegten Beleuchtungsstruktur erfolgen.

Mit einem Beleuchtungsmuster, das nicht wenigstens in einem Teilbereich aperiodisch und selbstunähnlich ist, wäre zum Beispiel eine Fehljustage der Kameras nicht eindeutig festzustellen, wie sich leicht am Beispiel eines Schachbrettmusters als Beleuchtungsstruktur erschließt: Liegen ein weißes Feld des ersten Bildes und ein schwarzes Feld des zweiten Bildes zunächst übereinander, können die Bilder durch eine Verschiebung um ein Feld in waagerechter Richtung oder durch ein Verschiebung um ein Feld in senkrechter Richtung oder durch eine Vielzahl von Linearkombination dieser Verschiebungen in Übereinstimmung gebracht werden. Auch fehljustierte Kameras können dann zum scheinbar richtigen Ergebnis führen, obwohl die Sicherheitsfunktion korrumpiert ist. Um solche Mehrdeutigkeiten zu vermeiden, muss es mindestens einen Teilbereich des inhomogenen Beleuchtungsmusters geben, der aperiodisch und selbstunähnlich ist.

Besonders vorteilhaft ist es, wenn die Bildauswerteeinheit vollständig in Hardware realisiert ist, da dadurch besonders gut industrielle Anforderungen im Bereich der Maschinenabsicherung insbesondere in Bezug auf Reaktionszeit erfüllt werden können. Dazu werden Rechenalgorithmen in ihre einzelnen Schritte zerlegt und anschließend in einer applikationsspezifischen integrierten Schaltung (ASIC) realisiert, und zwar bevorzugt in der Ausführung als FPGA (Field Programmable Gate Array). Bei geschickter Wahl und Ausführung des an sich bekannten Verfahrens lassen sich Verarbeitungsgeschwindigkeiten von wenigen Millisekunden für die Auswertung eines Stereobildpaares erreichen. Gleichzeitig gibt eine so hohe Verarbeitungsgeschwindigkeit die Möglichkeit, Testphasen des 3D-Sicherheits-Sensors wiederholt in Messphasen einzufügen, ohne die Ansprechzeit des 3D-Sicherheits-Sensors und damit seine Verfügbarkeit für die Schutzbereichsüberwachung unzulässig lange zu unterbrechen.

Das erfindungsgemäße Verfahren zum Testen eines erfindungsgemäßen 3D-Sicherheits-Sensors umfasst die Schritte Ablegen von Testmustern in einem Speicher für Testmuster (7), Zuführen von Testmustern als Eingangsdaten zu dem ersten und zweiten Eingang der Bildauswerteeinheit (2) anstelle der Kameradaten der ersten und zweiten Kamera (11,12), Prüfen der Bildauswerteeinheit (2) auf korrekte Funktion durch Vergleich des Ergebnisses der Verarbeitung dieser Eingangsdaten durch die Bildauswerteeinheit (2) mit einem im Speicher für Testmuster (7) hinterlegten Soll-Bild in einem Störungsdetektor (8) und Melden einer Störung über eine Störungs-Ausgangseinheit (9), wenn dabei ein über zulässige Toleranzen hinausgehender Unterschied festgestellt wird..

In einer besonders vorteilhaften Ausführungsform des Verfahrens werden auch Fehlfunktionen des Vergleichers nachgewiesen, indem ferner die Schritte Überprüfen der Funktion eines Vergleichers durch Überwachung, ob ein aus dem Speicher für Testmuster in die Bildauswerteeinheit eingespeistes Testmuster, das aus Objekten der notwendigen Größe und Anzahl besteht, um eine Verletzung des Schutzbereiches hervorzurufen, die für eine vorliegende Schutzbereichsverletzung definierte Reaktion des Vergleichers hervorruft, durch den Störungsdetektor und Melden einer Störung über die Störungs-Ausgangseinheit, falls dies nicht der Fall ist, ausgeführt werden.

Der optische Zweig des 3D-Sicherheits-Sensors kann in die Funktionsüberwachung einbezogen werden, indem das Verfahren um die Schritte Bereitstellen eines Beleuchtungsmusters im Speicher für Testmuster, Aufnehmen eines ersten Bildes eines zu überwachenden Schutzraums ohne mit dem Beleuchtungsmuster strukturierte Beleuchtung, Auswerten des aufgenommenen ersten Bildes in der Bildauswerteeinheit, Speichern des ausgewerteten ersten Bildes in einem dafür vorgesehenen Bereich des Speichers für Schutzraumdefinitionen, Aufnehmen eines zweiten Bildes eines zu überwachenden Schutzraums mit strukturierter Beleuchtung, Auswerten des aufgenommenen zweiten Bildes in der Bildauswerteeinheit, Vergleichen des ausgewerteten zweiten Bildes mit dem aus dem Speicher für Schutzraumdefinitionen bereitgestellten ausgewerteten ersten Bild im Vergleicher, Vergleichen des Ergebnisses des Vergleichers mit der im Speicher für Testmuster bereitgestellten Beleuchtungsstruktur im Störungsdetektor und Melden einer Störung über die Störungs-Ausgangseinheit, falls der Vergleich negativ ausfällt, erweitert wird.

Dabei ist es sinnvoll, die beschriebenen Abfolgen von Schritten zur Funktionskontrolle des 3D-Sicherheits-Sensors jeweils zwischen Phasen regulären Messbetriebs des Sensors durchzuführen.

Im Folgenden wird eine Ausführungsform der Erfindung anhand der beigefügten Zeichnungen näher erläutert.

Es zeigt
- Fig. 1:: einen 3D-Sicherheits-Sensor gemäß einer Ausführungs- form der Erfindung während des Messbetriebs,
- Fig. 2:: den 3D-Sicherheits-Sensor aus Figur 1 während einer ersten Testbetriebsart,
- Fig. 3:: den 3D-Sicherheits-Sensor aus Figur 1 während einer zweiten Testbetriebsart und
- Fig. 4:: den 3D-Sicherheits-Sensor aus Figur 1 während einer dritten Testbetriebsart.

Da alle Figuren eine Ausführungsform der Erfindung zeigen, die dieselben Komponenten umfasst, die lediglich anders miteinander verschaltet sind, werden für die Komponenten in allen Figuren dieselben Bezugszeichen verwendet. Um die Unterscheidung zwischen Ein- und Ausgängen der Komponenten zu erleichtern, wird die Richtung des Signalflusses auf den Verbindungen zwischen den Komponenten durch Pfeile angegeben.

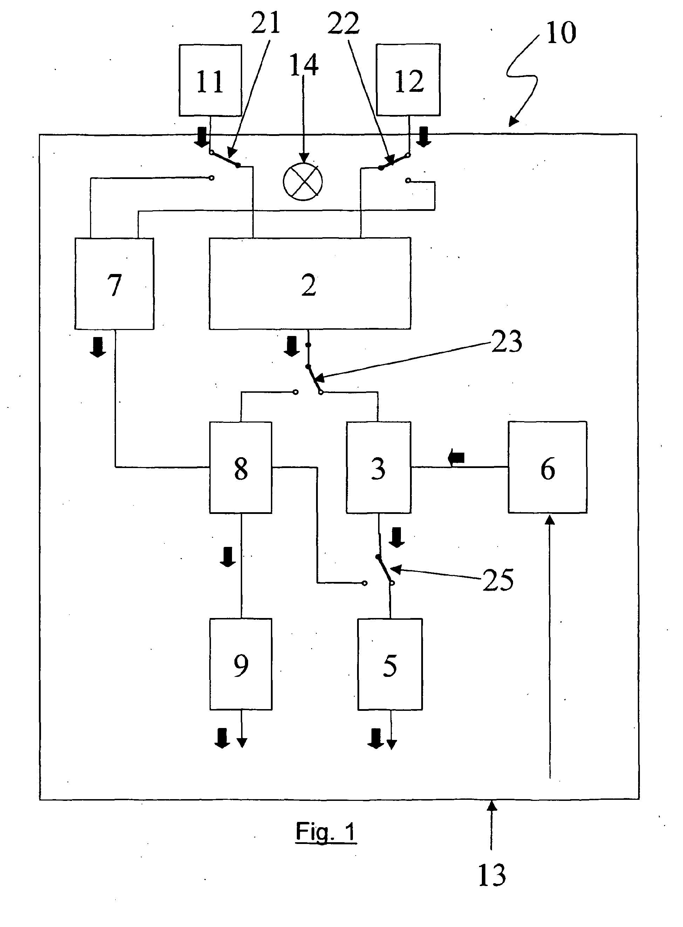

Figur 1 zeigt einen 3D-Sicherheits-Sensor 10 im Messbetrieb. Der 3D-Sicherheits-Sensor 10 umfasst eine erste Kamera 11, eine zweite Kamera 12 und eine Steuer- und Auswerteeinheit 13. Die Steuer- und Auswerteeinheit 13 umfasst eine Bildauswerteeinheit 2, einen Vergleicher 3, eine Schutzraumverletzungs-Ausgangseinheit 5, einen Speicher für Schutzraumdefinition 6, einen Speicher für Testmuster 7, einen Störungsdetektor 8, eine Störungs-Ausgangseinheit 9 sowie Schalter 21, 22, 23 und 25. Zusätzlich ist eine Beleuchtungseinheit 14 vorgesehen, mittels derer der Raumbereich, in dem sich die Raumwinkelbereiche, die von den Kameras 11 bzw. 12 erfasst werden, überlappen, zumindest in Teilbereichen mit einer Beleuchtungsstruktur versehen werden können, die die Eigenschaften inhomogenen, aperiodisch und selbstunähnlich aufweist.

Im in Figur 1 dargestellten Messbetrieb ist die erste Kamera 11 über den Schalter 21 mit einem ersten Eingang der Bildauswerteeinheit 2 und die zweite Kamera 12 über den Schalter 22 mit einem zweiten Eingang der Bildauswerteeinheit 2 verbunden. Der Ausgang der Bildauswerteeinheit 2 ist über den Schalter 23 mit einem ersten Eingang des Vergleichers 3 verbunden, dessen zweiter Eingang mit dem Speicher für Schutzraumdefinition 6 verbunden ist. Der Ausgang des Vergleichers 3 ist über den Schalter 25 mit der Schutzraumverletzungs-Ausgangseinheit 5 verbunden.

Zwei Ausgänge des Speichers für Testmuster 7 sind mit den Kontaktpunkten der Schalter 21, 22, die im Messbetrieb nicht geschaltet sind, verbunden, eine weitere Verbindung besteht zu einem Eingang des Störungsdetektors 8. Weitere Eingänge des Störungsdetektors 8 sind mit den Kontaktpunkten der Schalter 23 und 25, die im Messbetrieb nicht geschaltet sind, verbunden. Der Ausgang des Störungsdetektors 8 ist mit der Störungs-Ausgangseinheit 9, die zur Ausgabe der Störungsmeldung dient, verbunden.

Bei der vorstehend beschriebenen Verschaltung der Steuer- und Auswerteeinheit 13 werden die von der ersten Kamera 11 und der zweiten Kamera 12 aufgenommenen Bilder der Bildauswerteeinheit 2 zugeführt und in dieser zu einem 3D-Sensorbild verarbeitet. Dieses 3D-Sensorbild wird an den Vergleicher 3 weitergeleitet, der einen Vergleich mit einem im Speicher für Schutzraumdefinition 6 hinterlegten 3D-Sensorbild für einen ungestörten Schutzraum durchführt. Wird Übereinstimmung innerhalb der zu erwartenden Toleranzbereiche zwischen dem aufgenommenen und dem hinterlegten 3D-Sensorbildes festgestellt, bleibt die Schutzraumverletzungs-Ausgangseinheit 5 passiv oder gibt ein Signal "Schutzraum nicht verletzt" aus. Werden im Vergleicher 3 signifikante Unterschiede zwischen dem aufgenommenen und dem hinterlegten Sensorbild gefunden, wird eine Verletzung des Schutzraums festgestellt und gegebenenfalls eine Sicherheitsfunktion ausgelöst.

Der Speicher für Testmuster 7, der Störungsdetektor 8 und die Störungs-Ausgangseinheit 9 bleiben in diesem Betriebsmodus funktionslos.

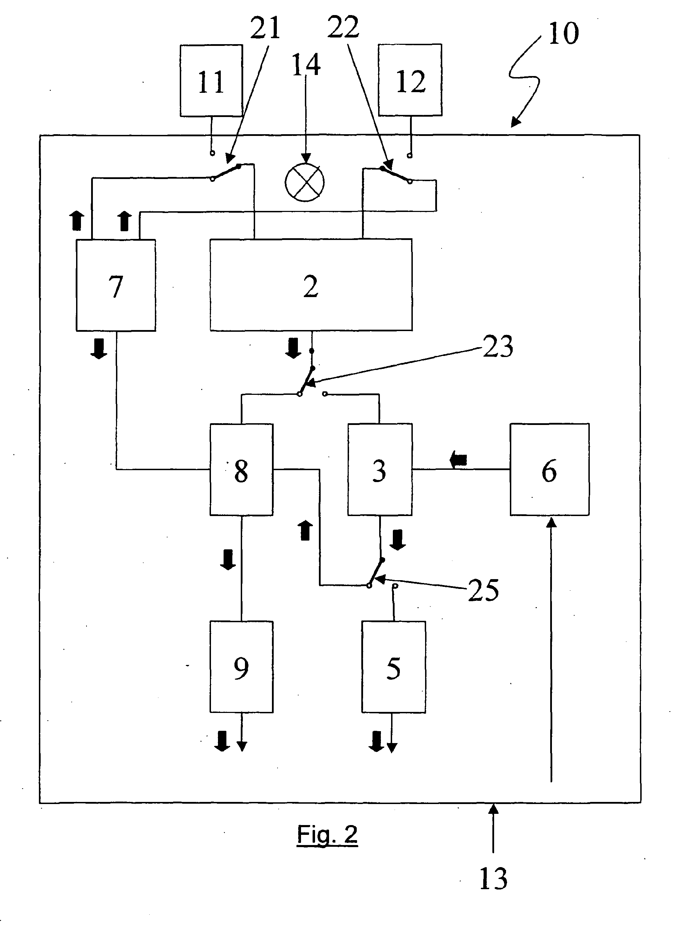

Figur 2 zeigt den 3D-Sicherheits-Sensor 10 gemäß Figur 1 in einem ersten Testbetrieb.

Im ersten Testbetrieb sind die Schalter 21, 22, 23 und 25 jeweils in eine zweite Schaltposition gebracht. Damit sind nun der erste und der zweite Eingang der Bildauswerteeinheit 2 jeweils über die Schalter 21, 22 mit einem Ausgang des Speichers für die Testmuster 7 verbunden. Außerdem besteht eine Verbindung zwischen dem Ausgang der Bildauswerteeinheit 2 und dem Störungsdetektor 8 über den Schalter 23 sowie zwischen dem Ausgang des Vergleichers 3 und dem Störungsdetektor 8 über den Schalter 25. Getestet wird in diesem Testbetrieb die Bildauswerteeinheit 2, der nun definierte Testmuster aus dem Speicher für Testmuster 7 als Eingangsdaten zugeführt werden. Das Ergebnis der Verarbeitung dieser Eingangsdaten durch die Bildauswerteeinheit 2 wird an den Störungsdetektor 8 übermittelt, in dem es mit dem korrekten Ergebnis verglichen wird. Dieses korrekte Ergebnis kann ebenfalls im Speicher für Testmuster 7 oder, falls der Vergleicher 3 dafür geeignet ausgelegt ist, auch im Speicher für Schutzraumdefinition 6 gespeichert sein und über den Vergleicher 3 an den Störungsdetektor 8 weitergeleitet werden. Wird innerhalb der zu erwartenden Toleranzbereiche Übereinstimmung zwischen dem dem Störungsdetektor 8 zugeleiteten Ausgangssignal der Bildauswerteeinheit 2 und dem korrekten Ergebnis durch den Störungsdetektor 8 festgestellt, so wird kein Ergebnis "Störung" an die Störungs-Ausgangseinheit 9 weitergeleitet, andernfalls wird dieses Ergebnis weitergeleitet.

Besonders präzise wird der Nachweis einer Störung, wenn das korrekte Ergebnis im Speicher für Schutzraumdefinition 6 und im Speicher für Testmuster 7 gespeichert ist, da in dieser Ausführungsform bei Übereinstimmung innerhalb der zu erwartenden Toleranzbereiche des Resultats der oben beschriebenen Vergleiche im Störungsdetektor 8 eindeutig auf eine Fehlfunktion der Bildauswerteeinheit 2 geschlossen werden kann.

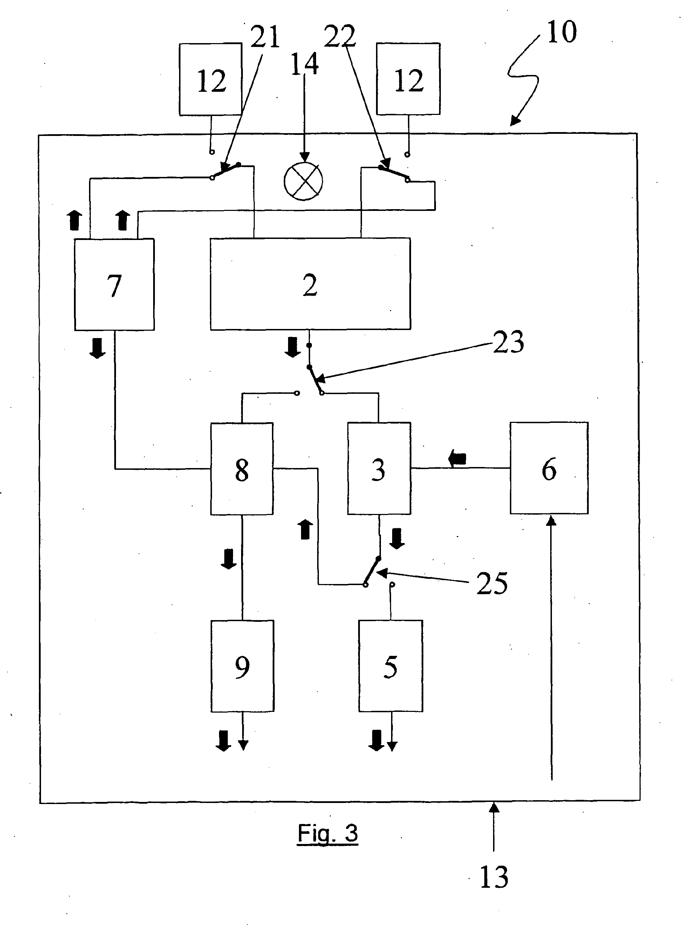

Figur 3 zeigt den 3D-Sicherheits-Sensor 10 gemäß Figur 1 in einem zweiten Testbetrieb, der gemäß dem erfindungsgemäßen Verfahren kumulativ zum ersten Testbetrieb durchgeführt wird.

Im zweiten Testbetrieb sind die Schalter 21, 22 und 25 wie im ersten Testbetrieb gemäß Figur 2 geschaltet, aber Schalter 23 wie im Messbetrieb gemäß Figur 1. Dementsprechend wird in diesem Betriebsmodus das Ausgangssignal, das die Bildauswerteeinheit 2 aus den Testmustersignalen erzeugt, an den Vergleicher 3 weitergeleitet und mit der im Speicher für Schutzraumdefinition 6 gespeicherten Definition des Schutzfeldes oder der Schutzfelder verglichen. In dieser Betriebsart wird der Störungsdetektor 8 so betrieben, dass er überprüft, ob der Vergleicher 3 korrekt auf die zum Test provozierten virtuellen Schutzraumverletzungen reagiert. Ist dies der Fall, liegt keine Störung vor. Ist dies nicht der Fall, liegt eine Störung entweder bei der Bildauswerteeinheit 2, was im ersten Testbetrieb nachgewiesen werden kann, oder beim Vergleicher 3 oder beim Speicher für Schutzraumdefinition 6 vor. Richtet man den Speicher für die Schutzraumdefinition 6 so ein, dass er separat ausgelesen werden kann, beispielsweise durch Anzeige auf einem Display, lässt sich auch zwischen diesen Komponenten leicht entscheiden, welche fehlerhaft arbeitet.

Falls eine Störung vorliegt, empfängt die Störungs-Ausgangseinheit 9 das Signal, dass eine Störung vorliegt, vom Störungsdetektor 8 und setzt dieses in eine Störungsmeldung um.

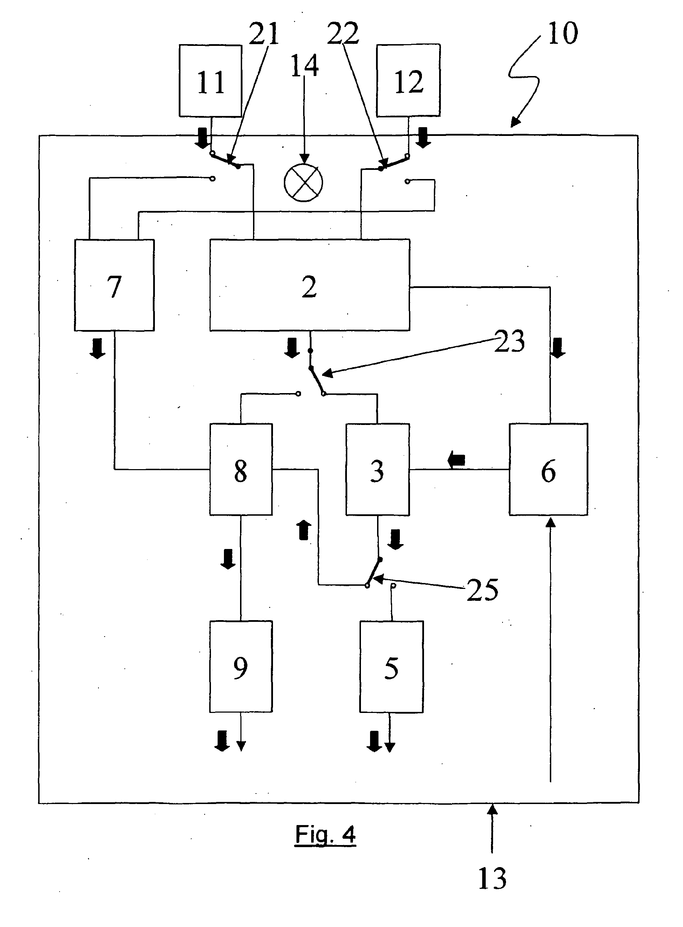

Figur 4 zeigt eine Ausführungsform der Erfindung, mit der ein dritter Testbetrieb erfolgen kann, der nicht nur die eigentliche Steuer- und Auswerteelektronik 13, sondern auch die Kameras 11, 12 in die Funktionsprüfung einbezieht und der gemäß dem erfindungsgemäßen Verfahren kumulativ zum ersten Testbetrieb durchgeführt wird.

Der dargestellte 3D-Sicherheits-Sensor 10 entspricht weitgehend dem in Figur 1 dargestellten 3D-Sicherheits-Sensor. Ein Unterschied besteht darin, dass die Bildauswerteeinheit 2 einen zusätzlichen Ausgang besitzt, über den Daten in den Speicher für Schutzraumfunktionen 6 in einen dafür reservierten Speicherbereich eingeschrieben werden können. Ferner ist bei diesem Messbetrieb die durch die Beleuchtungseinheit 14 erzeugte Beleuchtungsstruktur auch als Testmuster im Speicher für Testmuster 7 gespeichert. Die Position der Schalter 21, 22 und 23 ist identisch zu der im Fall des in Figur 1 dargestellten Messbetriebs, aber die Position des Schalters 25 weicht davon ab, so dass der Ausgang der Bildauswerteeinheit 2 mit und der Ausgang des Vergleichers 3 jeweils mit einem Eingang des Störungsdetektors 8 in Verbindung stehen.

Der dritte Testbetrieb umfasst die folgenden Schritte: Zunächst wird mit den Kameras 11, 12 ein Bild ohne Beleuchtung durch die Beleuchtungseinheit 14 aufgenommen und in der Bildauswerteeinheit 2 ausgewertet. Das Ergebnis der Auswertung wird in dem dafür vorgesehenen Speicherbereich im Speicher für Schutzraumdefinitionen 6 gespeichert. Anschließend wird mit den Kameras 11, 12 ein Bild mit strukturierter Beleuchtung durch die nun eingeschaltete Beleuchtungseinheit 14 aufgenommen, in der Bildauswerteeinheit 2 ausgewertet und über den Ausgang der Bildauswerteeinheit 2 einem Eingang des Vergleichers 3 zugeführt. Am anderen Eingang des Vergleichers 3 wird das im dafür vorgesehenen Speicherbereich des Speichers für Schutzraumdefinition 6 gespeicherte zuvor aufgenommenen Bild ohne Beleuchtung bereitgestellt, und der Vergleicher 3 vergleicht beide Bilder. Das Ergebnis dieses Vergleichs muss zumindest in Teilbereichen des Bildes die Struktur der Beleuchtung ergeben. Um festzustellen, ob dies der Fall ist, wird das Ausgangssignal des Vergleichers 3 an einen Eingang des Störungsdetektors 8 angelegt und die im Speicher für Testmuster 7 hinterlegte Beleuchtungsstruktur am einem anderen Eingang des Störungsdetektors 8. Der Störungsdetektor 8 vergleicht beide Signale miteinander; stimmen sie auch nicht in Teilbereichen überein, so wird über die Störungs-Ausgangseinheit 9 eine Störungsmeldung ausgegeben, andernfalls ist sichergestellt, dass alle Komponenten funktionstüchtig sind.

Es ist allerdings stets bei der Definition des Kriteriums, das zur Bewertung, ob eine Übereinstimmung vorliegt oder nicht, darauf zu achten, dass bei dem so durchgeführten Vergleich wegen der Verwendung realen Beleuchtungsdaten keine absolute Identität insbesondere im Hinblick auf die Intensität der Beleuchtungsmuster erwartet werden kann sondern gegebenenfalls nur darauf abzustellen ist, dass Strukturen in der Beleuchtung wiedergefunden werden.

Durch Durchführung der drei Testbetriebsarten lässt sich damit sicherstellen, dass jede für die Feststellung einer Schutzraumverletzung notwendige Komponente einwandfrei funktioniert, und in dem Fall, dass eine Fehlfunktion einer Komponente auftritt, eine Identifikation dieser Komponente durchführen.

### Bezugszeichenliste

- 2: Bildauswerteeinheit
- 3: Vergleicher
- 5: Schutzraumverletzungs-Ausgangseinheit
- 6: Speicher für Schutzraumdefinition
- 7: Speicher für Testmuster
- 8: Störungsdetektor
- 9: Störungs-Ausgangseinheit
- 10: 3D-Sicherheits-Sensor
- 11: erste Kamera
- 12: zweite Kamera
- 13: Steuer- und Auswerteeinheit
- 14: Beleuchtungseinheit
- 21: Schalter
- 22: Schalter
- 23: Schalter
- 25: Schalter

## Patentansprüche

1. 3D-Sicherheits-Sensor (10), umfassend
eine erste Kamera (11) und eine zweite Kamera (12), die so ausgerichtet sind, dass ihre Raumwinkelbereiche sich überlappen, und eine Steuer- und Auswerteeinheit (13) umfassend eine Bildauswerteeinheit (2), einen Vergleicher (3), einen Speicher für Schutzraumdefinition (6) und eine Schutzraumverletzungs-Ausgangseinheit (5), wobei
- zusätzlich ein Speicher für Testmuster (7), ein Störungsdetektor (8) und eine Störungs-Ausgangseinheit (9) in der Steuer- und Auswerteeinheit (13) vorgesehen sind,
- Signalverbindungen zumindest zwischen einem Ausgang des Speichers für Testmuster (7) und einem Eingang des Störungsdetektors (8), zwischen einem Ausgang des Störungsdetektors (8) und einem Eingang der Störungs-Ausgangseinheit (9) sowie zwischen einem Ausgang des Speichers für Schutzraumdefinitionen (6) und einem Eingang des Vergleichers (3) bestehen,
- zwei Eingänge der Bildauswerteeinheit (2) über Schalter (21, 22) wahlweise mit jeweils einem Ausgang einer Kamera (11, 12) oder mit jeweils einem Ausgang des Speichers für Testmuster (7) verbindbar sind und
- ein Ausgang der Bildauswerteeinheit (2) über einen Schalter (23) jeweils wahlweise mit einem Eingang des Vergleichers (3) oder mit einem Eingang des Störungsdetektors (8) verbindbar ist und/oder ein Ausgang des Vergleichers (3) über einen Schalter (25) jeweils wahlweise mit einem Eingang der Schutzraumverletzungs-Ausgangseinheit (5) oder mit einem Eingang des Störungsdetektors (8) verbindbar ist.

2. 3D-Sicherheits-Sensor nach einem Anspruch 1, bei den zusätzlich eine Signalverbindung zwischen einem Ausgang der Bildauswerteeinheit (2) und einem Speicherbereich des Speichers für Schutzraumdefinitionen (6) vorgesehen ist, über die Ergebnisse der Auswertung in der Bildauswerteeinheit (2) im vorgesehenen Speicherbereich des Speichers für Schutzraumdefinitionen (6) speicherbar sind.

3. 3D-Sicherheits-Sensor nach Anspruch 1 oder 2, bei dem zusätzlich eine Beleuchtungseinheit (14) vorgesehen ist, mittels derer der Raumbereich, in dem sich die Raumwinkelbereiche, die von den Kameras (11, 12) erfasst werden, überlappen, zumindest in Teilbereichen mit einer Beleuchtungsstruktur versehbar sind, die die Eigenschaften inhomogen, aperiodisch und selbstunähnlich aufweist.

4. 3D-Sicherheits-Sensor nach einem vorstehenden Anspruch, bei dem die Bildauswerteeinheit (2) vollständig in Hardware realisiert ist.

5. Verfahren zum Testen eines 3D-Sicherheits-Sensors nach einem vorstehenden Anspruch, wobei der 3D-Sicherheitssensor dazu eingerichtet ist, die von einer ersten Kamera (11) und einer zweiten Kamera (12) aufgenommenen Bilder von einer Bildauswerteeinheit (2) zu einem 3D-Sensorbild verarbeiten zu lassen,
das Verfahren umfassend die Schritte
- Ablegen von Testmustern in einem Speicher für Testmuster (7),
- Zuführen von Testmustern als Eingangsdaten zu dem ersten und zweiten Eingang der Bildauswerteeinheit (2) anstelle der Kameradaten der ersten und zweiten Kamera (11,12),
- Prüfen der Bildauswerteeinheit (2) auf korrekte Funktion durch Vergleich des Ergebnisses der Verarbeitung dieser Eingangsdaten durch die Bildauswerteeinheit (2) mit einem im Speicher für Testmuster (7) hinterlegten Soll-Bild in einem Störungsdetektor (8) und
- Melden einer Störung über eine Störungs-Ausgangseinheit (9), wenn dabei ein über zulässige Toleranzen hinausgehender Unterschied festgestellt wird.

6. Verfahren nach Anspruch 5, umfassend ferner die Schritte: Überprüfen der Funktion eines Vergleichers (3) durch Überwachung, ob ein aus dem Speicher für Testmuster (7) in die Bildauswerteeinheit (2) eingespeistes Testmuster, das aus Objekten der notwendigen Größe und Anzahl besteht, um eine Verletzung des Schutzbereiches hervorzurufen, die für eine vorliegende Schutzbereichsverletzung definierte Reaktion des Vergleichers (3) hervorruft durch den Störungsdetektor (8) und Melden einer Störung über die Störungs-Ausgangseinheit (9), falls dies nicht der Fall ist.

7. Verfahren nach Anspruch 5 oder 6, umfassend ferner die Schritte Bereitstellen eines Beleuchtungsmusters im Speicher für Testmuster (7), Aufnehmen eines ersten Bildes eines zu überwachenden Schutzraums ohne mit dem Beleuchtungsmuster strukturierte Beleuchtung, Auswerten des aufgenommenen ersten Bildes in der Bildauswerteeinheit (2), Speichern des ausgewerteten ersten Bildes in einem dafür vorgesehenen Bereich des Speichers für Schutzraumdefinitionen (6), Aufnehmen eines zweiten Bildes eines zu überwachenden Schutzraums mit strukturierter Beleuchtung, Auswerten des aufgenommenen zweiten Bildes in der Bildauswerteeinheit (2), Vergleichen des ausgewerteten zweiten Bildes mit dem aus dem Speicher für Schutzraumdefinitionen (6) bereitgestellten ausgewerteten ersten Bild im Vergleicher (3), Vergleichen des Ergebnisses des Vergleichers (3) mit der im Speicher für Testmuster (7) bereitgestellten Beleuchtungsstruktur im Störungsdetektor (8) und Melden einer Störung über die Störungs-Ausgangseinheit (9), falls der Vergleich auch in Teilbereichen keine Übereinstimmungen ergibt.

## Claims

1. 3D security sensor (10), comprising a first camera (11) and a second camera (12), which are set up in such a way that their solid angle regions overlap, and a control and evaluation unit (13) comprising an image evaluation unit (2), a comparator (3), a memory for protection area definition (6) and a protection area intrusion output unit (5), wherein additionally a memory for test patterns (7), a fault detector (8) and a fault output unit (9) are provided in the control and evaluation unit (13),
signal connections exist at least between an output of the memory for test patterns (7) and an input of the fault detector (8), between an output of the fault detector (8) and an input of the fault output unit (9), as well as between an output of the memory for protection area definitions (6) and an input of the comparator (3),
two inputs of the image evaluation unit (2) can be connected via switches (21, 22), optionally respectively with an output of a camera (11, 12) or respectively with an output of the memory for test patterns (7), and
one output of the image evaluation unit (2) can be connected via a switch (23) respectively optionally with an input of the comparator (3) or with an input of the fault detector (8), and/or an output of the comparator (3) can be connected via a switch (25) respectively optionally with an input of the protection area intrusion output unit (5) or with an input of the fault detector (8).

2. 3D security sensor according to claim 1, in which additionally a signal connection is provided between an output of the image evaluation unit (2) and a memory area of the memory for protection area definitions (6), via which results of the evaluation in the image evaluation unit (2) can be stored in the envisaged storage area of the memory for protection area definitions (6).

3. 3D security sensor according to claim 1 or 2, in which additionally a lighting unit (14) is provided, by means of which the spatial area in which the solid angle regions that are recorded by the cameras (11, 12) overlap can be provided, at least in sub-regions, with a lighting structure which has the properties of inhomogeneity, aperiodicity and non-self-similarity.

4. 3D security sensor according to a preceding claim, in which the image evaluation unit (2) is fully realised in the hardware.

5. Method for testing a 3D security sensor according to a preceding claim, wherein the 3D security sensor is set up so as to allow the images taken by a first camera (11) and a second camera (12) to be processed by an image evaluation unit (2) into a 3D sensor image,
the method further comprising the steps
- storing test patterns in a memory for test patterns (7),
- supplying test patterns as input data to the first and second inputs of the image evaluation unit (2) instead of the camera data from the first and second camera (11, 12)
- checking the image evaluation unit (2) for correct functioning by comparing the result of the processing of these input data by the image evaluation unit (2) with a reference image stored in the memory for test patterns (7) in a fault detector (8) and
- signalling of a fault via a fault output unit (9) if, in the course of this, a difference is established that goes beyond permitted tolerances.

6. Method according to claim 5, further comprising the steps:
checking the functioning of a comparator (3) by monitoring whether a test pattern which is fed into the image evaluation unit (2) from the memory for test patterns (7), and which consists of objects of the necessary size and quantity in order to trigger an infringement of the protection area, triggers the reaction of the comparator (3) that is defined for a protection area infringement that is present, via the fault detector (8), and signalling
of a fault via the fault output unit (9) if this is not the case.

7. Method according to claim 5 or 6, further comprising the steps of providing a lighting pattern in the memory for test patterns (7), recording a first image of a protection area that is to be monitored without the illumination that is structured with the lighting pattern, evaluating the recorded first image in the image evaluation unit (2), storage of the evaluated first image in an area of the memory for protection area definitions (6) that is envisaged for this, recording of a second image of a protection area that is to be monitored with structured lighting, evaluation of the recorded second image in the image evaluation unit (2), comparison of the evaluated second image with the evaluated first image provided from the memory for protection area definitions (6) in the comparator (3), comparison of the result of the comparator (3) with the lighting structure provided in the memory for test patterns (7) in the fault detector (8) and signalling of a fault via the fault output unit (9) if the comparison does not yield any correspondences even in sub-regions.

## Revendications

1. °) Capteur de sécurité en 3D (10) comprenant :
une première caméra (11) et une seconde caméra (12), alignées pour que leurs plages d'angle solide se chevauchent, et une unité de commande et
d'exploitation (13) comprenant une unité d'exploitation d'image (2), un comparateur (3), une mémoire de définition de l'espace protégé (6), et
une unité de sortie, d'atteinte à l'espace protégé (5),
dans lequel
- l'unité de commande et d'exploitation (13) comprend en plus une mémoire de motif de test (7), un détecteur d'incident (8) et une unité de sortie d'incident (9),
- des liaisons de transmission de signaux sont prévues au moins entre une sortie de la mémoire de motif de test (7) et une entrée du détecteur d'incident (8), entre une sortie du détecteur d'incident (8) et une entrée de l'unité de sortie d'incident (9), ainsi qu'entre une sortie de la mémoire des définitions de l'espace protégé (6) et une entrée du comparateur (3),
- deux entrées de l'unité d'exploitation d'image (2) peuvent être reliées respectivement par des commutateurs (21, 22) chacune à la sortie d'une caméra (11, 12) ou à la sortie de la mémoire de motif de test (7),
- une sortie de l'unité d'exploitation d'image (2) est respectivement reliée par un commutateur (23) à une entrée du comparateur (3) ou à une entrée du détecteur d'incident (8) et/ou une sortie du comparateur (3) est reliée respectivement par un commutateur (25) à une entrée de l'unité de sortie, d'atteinte à l'espace protégé (5) ou à une entrée du détecteur d'incident (8).

2. °) Capteur de sécurité en 3D selon la revendication 1,
dans lequel
en plus, il est prévu une liaison de signal entre une sortie de l'unité d'exploitation d'image (2) et une plage de la mémoire des définitions de l'espace protégé (6), pour enregistrer les résultats de l'exploitation de l'unité d'exploitation d'image (2) dans une plage prédéterminée de la mémoire des définitions de l'espace protégé (6).

3. °) Capteur de sécurité en 3D selon la revendication 1 ou 2,
dans lequel
en plus, il est prévu une unité d'éclairage (14) permettant d'appliquer à la plage d'espace dans laquelle les plages d'angle solide saisies par les caméras (11, 12) se chevauchent, au moins dans des zones partielles, d'une structure d'éclairage ayant les propriétés d'être non-homogène, apériodique et non-analogue avec elle-même.

4. °) Capteur de sécurité en 3D selon les revendications précédentes,
dans lequel
l'unité d'exploitation d'image (2) est complètement réalisée sous la forme de circuit.

5. °) Procédé de tests d'un capteur de sécurité en 3D selon une revendication précédente,
selon lequel
- le capteur de sécurité en 3D est installé pour que les images prises par une première caméra (11) et une seconde caméra (12), soient traitées par une unité d'exploitation d'image (2) pour donner une image de capteur en 3D,
- le procédé comprenant les étapes suivantes :
* enregistrer des motifs de test dans une mémoire de motif de test (7),
* appliquer des motifs de test comme données d'entrée à une première et à une seconde entrée de l'unité d'exploitation d'image (2) à la place des données de la première et de la seconde caméra (11, 12),
* vérifier le fonctionnement correct de l'unité d'exploitation d'image (2) par comparaison des résultats du traitement de ces données d'image par l'unité d'exploitation d'image (2) avec une image de consigne enregistrée dans la mémoire de motif de test (7), à l'aide d'un détecteur d'incident (8), et
* signaler un incident par l'unité de sortie d'incident (9) si l'on constate une différence dépassant les tolérances acceptées.

6. °) Procédé selon la revendication 5, comprenant en outre les étapes suivantes :
- vérifier le fonctionnement du comparateur (3) en surveillant si un motif de test fourni par la mémoire de motif de test (7) à l'unité d'exploitation d'image (2) et composé d'objets de dimension et de nombre nécessaire pour porter atteinte au domaine protégé, produit la réaction du comparateur (3) définie pour cette atteinte au domaine protégé, par le détecteur d'incident (8), et
- signaler un incident par l'unité de sortie d'incident (9) si cela n'est pas le cas.

7. °) Procédé selon la revendication 5 ou 6, comprenant en outre les étapes suivantes :
- fournir un motif d'éclairage à la mémoire de motif de test (7),
- saisir d'une première image d'un espace protégé, à surveiller, sans l'éclairage structuré par le motif d'éclairage,
- exploiter la première image prise dans l'unité d'exploitation d'image (2),
- enregistrer la première image exploitée dans une zone prévue à cet effet de la mémoire des définitions d'espace protégé (6),
- prendre une seconde image d'un espace protégé à surveiller avec un éclairage structuré,
- exploiter la seconde image prise dans l'unité d'exploitation d'image (2),
- comparer la seconde image exploitée à une première image exploitée, fournie par la mémoire des définitions d'espace protégé (6) dans le comparateur (3),
- comparer le résultat du comparateur (3) à la structure d'éclairage fournie par la mémoire de motif de test (7) dans le détecteur d'incident (8), et
- signaler un incident par l'unité de sortie d'incident (9) si la comparaison ne donne aucune concordance même dans des zones partielles.
